# EUROPÄISCHE PATENTSCHRIFT

(11) **EP 3 003 787 B1**
(45) Veröffentlichungstag und Bekanntmachung des Hinweises auf die Patenterteilung: **14.06.2017**
(21) Anmeldenummer: 14721317.7
(22) Anmeldetag: 29.04.2014
(51) Int. Cl.: B60R 16/03

(54) **BORDNETZ-ANORDNUNG FÜR EIN KRAFTFAHRZEUG**
ELECTRICAL SYSTEM ASSEMBLY FOR A MOTOR VEHICLE
ENSEMBLE TABLEAU DE BORD POUR VÉHICULE À MOTEUR

(30) Priorität: 24.05.2013 DE 102013209712
(43) Veröffentlichungstag der Anmeldung: 13.04.2016
(73) Patentinhaber: Mahle International GmbH, 70376 Stuttgart (DE)
(72) Erfinder: AMBROSIO, Daniele, 70191 Stuttgart (DE); BINDER, Tobias, 70192 Stuttgart (DE); CRAMME, Markus, 72218 Wildberg (DE); KRAPPEL, Michael, 70378 Stuttgart (DE)
(74) Vertreter: BRP Renaud & Partner mbB Rechtsanwälte Patentanwälte Steuerberater
(86) Internationale Anmeldenummer: PCT/EP2014/058654
(87) Internationale Veröffentlichungsnummer: WO 2014/187650

(56) Entgegenhaltungen:
- EP-A1- 1 568 601
- EP-A2- 1 291 998
- WO-A1-02/47234
- WO-A1-2012/104193
- DE-A1-102008 037 242
- DE-C1- 4 423 066
- DE-C1- 10 129 789
- US-A- 5 621 250
- US-A1- 2008 136 374

## Beschreibung

Die vorliegende Erfindung betrifft eine Bordnetz-Anordnung für ein Kraftfahrzeug sowie einen elektrischen Verbraucher mit einer solchen Bordnetz-Anordnung. Die Erfindung betrifft weiterhin ein elektrisches System mit wenigstens zwei solchen elektrischen Verbrauchern sowie ein Kraftfahrzeug mit wenigstens einer solchen Bordnetz-Anordnung und/oder mit wenigstens einem solchen elektrischen System. Die Erfindung betrifft schließlich ein Verfahren zum Aktivieren eines Bordnetzes aus einem Ruhezustand.

In modernen Kraftfahrzeugen kommen üblicherweise mindestens zwei verschiedene elektrische Bordnetze, beispielsweise ein 12V-Bordnetz und ein 48V-Bordnetz, zum Einsatz, welche verschiedene elektrische/elektronische Bauteile mit der von ihnen benötigten elektrischen Versorgungsspannung versorgen. Um die Energieversorgungseinheiten des Kraftfahrzeugs - üblicherweise wiederaufladbare Batterien - zu schonen, wenn sich das Kraftfahrzeug in einem abgestellten Zustand befindet und folglich mit Hilfe eines im Kraftfahrzeug verbauten Generators nicht im Fahrbetrieb wiederaufgeladen werden kann, sind die im Kraftfahrzeug vorhandenen Bordnetze häufig zwischen einem aktiven Zustand und einem sogenannten Ruhezustand umschaltbar. Im Ruhezustand sind die an das Bordnetz angeschlossenen elektrischen Verbraucher mittels eines elektrischen/elektronischen Schalters oder auch durch Verwendung von geeigneten integrierten Schaltkreisen (ICs) in der Art von Spannungswandlern, Kommunikations-ICs, usw. elektrisch von der Energieversorgungseinheit trennbar. Der Ruhezustand zeichnet sich also durch einen stark reduzierten Energieverbrauch der an das Bordnetz angeschlossenen elektrischen Verbraucher im Kraftfahrzeug aus, so dass die Energieversorgungseinheit geschont wird. Insbesondere wird auf diese Weise eine unerwünschte vollständige Entladung der Energieversorgungseinheit verhindert, wenn sich das Kraftfahrzeug im abgestellten Zustand befindet.

Im aktiven Zustand ist demgegenüber die Energieversorgungseinheit mit dem ihr zugeordneten elektrischen Bordnetz verbunden, d.h. eine elektrische Trennung mittels der vorangehend genannten Unterbrechungsschaltungen findet nicht statt, so dass die Energieversorgungseinheit den elektrischen Verbrauchern die für eine nominellen Betrieb erforderliche elektrische Energie zur Verfügung stellen kann. Um nun die Bordnetze vom besagten Ruhezustand in den aktiven Zustand umzuschalten, was einem sog. "Wake-up" - also einem "Aufwachen" - des Bordnetzes aus dem Ruhezustand entspricht, wird ein elektrischer/elektronischer Schalter, welcher die Energieversorgungseinheit vom verbleibenden restlichen Bordnetz trennt, in einen geschlossenen Zustand umgeschaltet, so dass die Energieversorgungseinheit elektrisch mit dem Bordnetz verbunden ist.

Für den Fall, dass das Kraftfahrzeug mehrere Bordnetze aufweist, muss ein solches Wakeup-Signal an alle Bordnetze individuell übermittelt werden und jedes Bordnetz für sich vom Ruhezustand in den aktiven Zustand umgeschaltet werden. Ein entsprechendes Aktivierungssignal kann in allen Bordnetzen des Kraftfahrzeugs beispielsweise durch ein im Kraftfahrzeug vorhandenes CAN- oder LIN-Bussystems bereitgestellt werden, was jedoch technisch relativ aufwändig zu realisieren ist, da das Bussystem in allen Bordnetzen mit den entsprechenden Schaltern bzw. Spannungsteilern/ICs gekoppelt werden muss. Entsprechendes gilt, wenn anstelle des Bussystems eine Startereinrichtung zum Aktivieren der Brennkraftmaschine des Kraftfahrzeugs, beispielweise die sog. "Klemme 15", beim Einschalten der Startereinrichtung, aktiviert wird. WO 02/47234 A1 offenbart ein Bordnetz-Anordnung für ein Fahrzeug.

Die vorliegende Erfindung beschäftigt sich mit dem allgemeinen Problem, bei der Entwicklung von Bordnetz-Anordnungen für ein Kraftfahrzeug, die zwischen einem aktiven Zustand und einem Ruhezustand umschaltbar ist, neue Wege aufzuzeigen.

Dieses Problem wird gelöst durch den Gegenstand der unabhängigen Patentansprüche. Bevorzugte Ausführungsformen sind Gegenstand der abhängigen Patentansprüche.

Die Erfindung beruht auf dem allgemeinen Gedanken, ein erstes, von einem zweiten Bordnetz galvanisch getrenntes Bordnetz mittels eines kapazitiven Kopplungselements zu koppeln, so dass das erste Bordnetz mittels dieses Kopplungselements zur Übertragung eines Wakeup-Signals kapazitiv mit dem zweiten Bordnetz gekoppelt ist. Zur Erzeugung eines solchen Wakeup- oder Aktivierungssignals, welches beispielsweise ein elektrisches Rechtecksignal oder ein anderes, vergleichbares Wechselspannungssignal sein kann, ist im ersten Bordnetz eine mit dem Kopplungselement zusammenwirkende Signalerzeugungseinheit vorgesehen. Mittels einer solchen Signalerzeugungseinheit kann am Kopplungselement eingangsseitig ein Aktivierungssignal zur Aktivierung des zweiten Bordnetzes aus dem Ruhezustand bereitgestellt werden. Entsprechend ist im zweiten Bordnetz, welches vom ersten Bordnetz aus dem Ruhezustand "aufgeweckt" werden soll, eine Signalempfangseinheit vorgesehen, welche mit dem Kopplungselement derart zusammenwirkt, dass als Folge einer Bereitstellung des Aktivierungssignals ausgangsseitig am Kopplungselement das zweite Bordnetz vom Ruhezustand in den aktiven Zustand umgeschaltet wird.

Bei der erfindungsgemäßen Bordnetz-Anordnung ist also eine indirekte Aktivierung des zweiten Bordnetzes, welches galvanisch vom ersten Bordnetz getrennt ist, mittels eines kapazitiven Kopplungselements möglich. Zusätzlich zu einem solchen Kopplungselement sind im ersten und zweiten Bordnetz also erfindungsgemäß lediglich eine Signalerzeugungseinheit bzw. eine Signalempfangseinheit erforderlich. Für den Fall, dass im ersten Bordnetz, beispielsweise durch das Bussystem des Kraftfahrzeugs, ein Wakeup-Signal erzeugt wird, und als Folge dieses Wakeup-Signals das erste Bordnetz von einem Ruhezustand in einen aktiven Zustand umgeschaltet wird, kann dieses mittels einer einfachen kapazitiven Kopplung an das zweite Bordnetz - und selbstverständlich auch an weitere im Kraftfahrzeug vorhandene Bordnetze - übertragen werden. Eine technisch aufwändige Kopplung des Bussystems mit allen Bordnetzen des Kraftfahrzeugs, derart, dass das Wakeup-Signal vom Bussystem in allen Bordnetzen separat bereitgestellt und weiterverarbeitet wird, entfällt also. Gleiches gilt, wenn das Wakeup-Signal mittels der Startereinrichtung des Kraftfahrzeugs bereitgestellt wird. Auch in diesem Fall ist es bei der erfindungsgemäßen Bordnetz-Anordnung ausreichend, wenn nur das erste Bordnetz mit der Startereinrichtung gekoppelt ist und mittels des erfindungsgemäßen kapazitiven Kopplungselements an das zweite Bordnetz bzw. an weitere im Kraftfahrzeug vorhandene Bordnetze übertragen wird. Mittels des kapazitiven Kopplungselements lässt sich die Signalübermittlung vom ersten auf das zweite Bordnetz auf technische einfache Weise realisieren. Die Verwendung von technisch aufwändig zu verbauenden Optokopplern, die zudem den Nachteil aufweisen, dass sie für die in Kraftfahrzeugen häufig auftretenden relativ hohen Betriebstemperaturen nicht geeignet sind, ist nicht erforderlich.

Bei der erfindungsgemäßen Bordnetz-Anordnung kann nun im zweiten Bordnetz ein Halbleiterschalter vorgesehen sein, mittels welchem eine elektrische Verbindung der dem zweiten Bordnetz zugeordneten Energieversorgungseinheit wahlweise aufgehoben oder wiederhergestellt werden kann. Dies entspricht der Umschaltung des zweiten Bordnetzes vom Ruhezustand in den aktiven Zustand und umgekehrt, d.h. bei Erzeugung des Wakeup-Signals im ersten Bordnetz und einer anschließenden Übertragung des Aktivierungssignals vom ersten an das zweite Bordnetz wird bei Empfang des Aktivierungssignals durch die Signalempfangseinrichtung ein Schließen des Halbleiterschalters bewirkt, so dass auf diese Weise die im Ruhezustand vorhandene elektrische Trennung der Energieversorgungseinheit vom zweiten Bordnetz aufgehoben wird. Somit kann die Energieversorgungseinheit alle am zweiten elektrischen Bordnetz angeschlossenen elektrischen Verbraucher mit elektrischer Energie versorgen.

Die Signalerzeugungseinheit im ersten Bordnetz kann mittels einer geeigneten Steuerungseinheit, beispielsweise in der Art eines Mikrokontrollers o.ä. angesteuert werden, wobei die Steuerungseinheit mit dem Bussystem des Kraftfahrzeugs oder mit der Startereinrichtung der Brennkraftmaschine des Kraftfahrzeugs zusammenwirken kann.

Für den Fall, dass im ersten Bordnetz vom Bussystem oder der Startereinrichtung ein Wakeup-Signal bereitgestellt wird, kann mittels der Steuerungseinrichtung die Signalerzeugungseinheit derart angesteuert werden, dass diese das Aktivierungssignal erzeugt und an dem Kopplungselement bereitstellt. Im einfachsten Fall kann eine solche Steuerungseinheit eine herkömmliche elektrische Signalleitung sein, welche mit der Signalerzeugungseinheit entsprechend zusammenwirkt, dass bei Bereitstellung eines elektrischen Signals auf dieser Steuerungsleitung die Signalerzeugungseinheit derart aktiviert wird, dass sie das Aktivierungssignal zur Übertragung an das zweite Bordnetz bereitstellt.

Bei einer bevorzugten Ausführungsform kann das kapazitive Kopplungselement zwei elektrisch parallel zueinander geschaltete Kondensatoren, insbesondere Keramikchipkondensatoren (MLCC), umfassen. Solche Kondensatoren sind elektronische Standardbauteile und somit kommerziell in großen Mengen und kostengünstig verfügbar, was sich wiederum günstig auf die Herstellungskosten der gesamten Bordnetz-Anordnung auswirkt.

Besonders bevorzugt kann die Bordnetz-Anordnung derart ausgebildet sein, dass ein im Ruhezustand im zweiten Bordnetz von einer Energieversorgungseinheit bereitgestellter elektrischer Strom einen vorbestimmten Maximalwert nicht überschreitet. Hierzu kann im zweiten Bordnetz beispielsweise ein elektrischer Schalter, insbesondere in der Art eines Halbleiterschalters, vorzugsweise ein Transistor, vorgesehen sein, welcher im Ruhezustand die Energieversorgungseinheit vom zweiten Bordnetz trennt. Eine solche Trennung kann derart realisiert sein, dass der von der Energieversorgungseinheit bereitstellbare elektrische Strom einen Nullwert annimmt, die Trennung mittels des Halbleiterschalters kann aber auch derart erfolgen, dass dem zweiten Bordnetz von der Energieversorgungseinheit im Ruhezustand ein elektrischer Ruhestrom zur Verfügung gestellt wird, welcher einen vorbestimmten Maximalwert nicht überschreitet. Bevorzugt kann ein solcher vorbestimmter Maximalwert 100 µA betragen; es ist klar, dass in Varianten aber auch andere Werte möglich sind.

Zu Realisierung der vorangehend beschriebenen Strombegrenzung im Ruhezustand des zweiten Bordnetzes kann anstelle eines Halbleiterschalters alternativ auch ein integrierter Schaltkreis in der Art eines Spannungswandlers oder eines geeigneten Kommunikations-ICs vorgesehen sein, welcher/welches die von der Energieversorgungseinheit gelieferte nominelle elektrische Versorgungsspannung auf einen niedrigeren Wert absenkt, solange der Ruhezustand eingestellt ist.

Grundsätzlich kann bei einer vorteilhaften Weiterbildung im zweiten Bordnetz ein umschaltbares elektrisches/elektronisches Schaltelement vorgesehen sein, welches zwischen einem geöffneten Zustand, der dem Ruhezustand des zweiten Bordnetzes zugeordnet ist, und einem geschlossenen Zustand, der dem aktiven Zustand des zweiten Bordnetzes zugeordnet ist, umgeschaltet werden kann. Gemäß dieser Ausführungsform ist die Energieversorgungseinheit im geschlossenen Zustand des Schaltelements elektrisch mit dem zweiten Bordnetz verbunden und im geöffneten Zustand elektrisch von diesem getrennt. Mit "Trennung" kann dabei wie vorangehend beschrieben gemeint sein, dass der von der Energieversorgungseinheit maximal bereitgestellte elektrische Strom einen vorbestimmten Maximalwert nicht überschreitet. Der "geöffneter Zustand" muss also nicht notwendigerweise eine vollständige Absenkung des von der Energieversorgungseinheit des zweiten Bordnetzes bereitstellbaren elektrischen Stroms auf einen Nullwert bedeuten.

Zur Ansteuerung des elektrischen/elektronischen Schaltelements kann nun gemäß dieser Ausführungsform im zweiten Bordnetz eine mit der Signalempfangseinheit zusammenwirkende Steuerungseinheit vorgesehen sein, welche das Schaltelement beim Empfang des Aktivierungssignals durch die Signalempfangseinheit in den geschlossenen Zustand umschaltet. Eine solche Signalempfangseinheit kann in der Art eines Mikrokontrollers oder eines integrierten Schaltkreises (ICs) realisiert sein. Im einfachsten Fall kann auch daran gedacht sein, einen elektrischen Gleichrichter vorzusehen, welcher das am Kopplungselement ausgangsseitig bereitgestellte Wechselspannungssignal glättet. Mittels einer derartigen Glättung kann dann beispielsweise Steuerung des Schaltelements, beispielsweise eines Transistors, erfolgen.

In einer besonders bevorzugten Ausführungsform kann im ersten Bordnetz zwischen der Signalerzeugungseinheit und dem Kopplungselement eine Ladungspumpe vorgesehen sein, welche als Gleichspannungswandler wirkt und mittels welcher somit eine Amplitude des von der Signalerzeugungseinheit erzeugten Wechselspannungssignals einstellbar ist.

Gemäß einer vorteilhaften Weiterbildung kann die Signalerzeugungseinheit einen Signalgenerator umfassen, mittels welchem zum Erzeugen des Aktivierungssignals ein elektrisches Wechselspannungssignal, insbesondere eine Rechteckspannung, erzeugbar ist. Auch die Signalerzeugungseinheit kann in Form eines integrierten Schaltkreises (IC) realisiert sein, oder Teil eines Mikrokontrollers sein. Derartige integrierte Schaltkreise bzw. Mikrokontroller sind kommerziell in großen Mengen kostengünstig verfügbar, was sich kostengünstig auf die Herstellungskosten der gesamten Bordnetz-Anordnungen auswirkt.

Die Erfindung betrifft ferner einen elektrischer Verbraucher, insbesondere eine Ölpumpe oder eine elektrische Kühlmittelpumpe oder einen elektrischen Abgasturbolader oder einen elektrischer Kompressor oder einen elektrischer Lüfter, mit einer Bordnetz-Anordnung mit einem oder mehreren der vorangehend erläuterten Merkmale.

Die Erfindung betrifft auch ein elektrisches System, insbesondere für ein Kraftfahrzeug, mit wenigstens zwei vorangehend vorgestellten elektrischen Verbrauchern, welche mittels des ersten und zweiten Bordnetzes elektrisch miteinander verbunden sind. Das elektrische System weist eine gemeinsame, im zweiten elektrischen Bordnetz angeordnete zweite elektrische Energieversorgungseinheit auf, welche im Ruhezustand des zweiten Bordnetzes elektrisch von diesem getrennt ist und im aktiven Zustand elektrisch mit diesem verbunden ist.

Die Erfindung betrifft schließlich ein Kraftfahrzeug mit wenigstens einer Bordnetz-Anordnung mit einem oder mehreren der vorangehend erläuterten Merkmale und/oder wenigstens einem vorangehend vorgestellten elektrischen System.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen darge-stellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Beispiel für eine erfindungsgemäße Bordnetz-Anordnung in einer grobschematischen, schaltplanartigen Darstellung,
- Fig. 2: ein Beispiel für ein elektrisches System mit einer erfindungsgemäßen Bordnetz-Anordnung, ebenfalls in einer schaltplanartigen Darstellung.

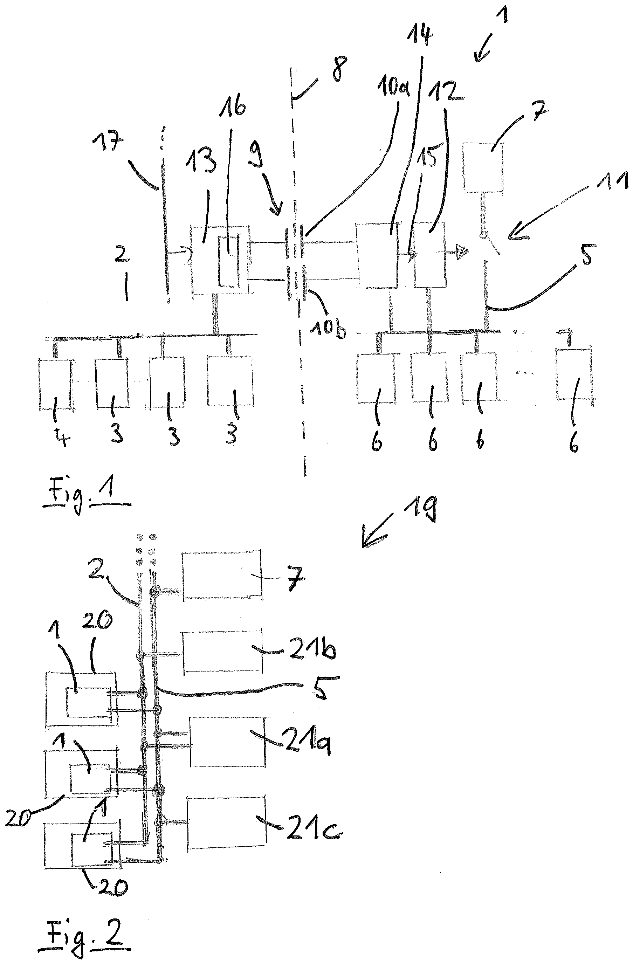

In der Fig. 1 ist eine erfindungsgemäße Bordnetz-Anordnung in einer schaltplanartigen Darstellung grobschematisch gezeigt und mit 1 bezeichnet. Die Bordnetz-Anordnung 1 umfasst ein erstes Bordnetz 2, mittels welchem verschiedene elektrische/elektronische Bauteile 3 durch eine erste elektrische Energieversorgungseinheit 4 mit elektrischer Energie versorgt werden. Das erste Bordnetz 2 kann beispielsweise ein 12V-Bordnetz sein, d.h. die erste Energieversorgungseinheit 4 in Form einer wiederaufladbaren Batterie stellt als elektrische Ausgangsspannung im ersten Bordnetz 2 eine Ausgangsspannung von 12V bereit.

In der Fig. 1 sind exemplarisch drei elektrische/elektronische Bauteile 3 gezeigt, die an das erste Bordnetz 2 angeschlossen sind; es ist klar, dass aber auch eine andere Anzahl solcher Bauteile 3 im ersten Bordnetz 2 angeordnet sein kann. Die Bordnetz-Anordnung 1 umfasst des Weiteren ein galvanisch vom ersten Bordnetz 2 getrenntes zweites Bordnetz 5. Mittels des zweiten Bordnetzes 5 können an das zweite Bordnetz 5 angeschlossene elektrische/elektronische Bauteile 6 in analoger Weise zum ersten Bordnetz 2 mit elektrischer Energie aus einer zweiten Energieversorgungseinheit 7 versorgt werden. Das zweite Bordnetz 5 kann dabei beispielsweise ein 48V-Bordnetz sein, d.h. die dem zweiten Bordnetz 5 von der zweiten Energieversorgungseinheit 7 bereitgestellte elektrische Ausgangsspannung beträgt 48V; selbstverständlich sind in Varianten auch andere elektrische Spannungswerte möglich.

Die galvanische Trennung des ersten Bordnetzes 2 vom zweiten Bordnetz 5 ist in der Fig. 1 grobschematisch durch eine gestrichelte Linie mit dem Bezugszeichen 8 dargestellt. In der Bordnetz-Anordnung 1 ist nun ein kapazitives Kopplungselement 9 vorgesehen, mittels welchem das erste Bordnetz 2 mit dem zweiten Bordnetz 5 zur Signalübertragung kapazitiv gekoppelt ist. Auf diese Weise kann das zweite Bordnetz, welches zwischen einem Ruhezustand und einem aktiven Zustand umschaltbar ist, über ein im ersten Bordnetz 2, beispielsweise durch ein Bussystem des Kraftfahrzeugs bereitgestelltes, Wakeup-Signal informiert und daraufhin vom Ruhezustand in den aktiven Zustand umgeschaltet werden. Das kapazitive Kopplungselement 9 kann dabei wie in der Fig. 1 gezeigt beispielsweise zwei elektrisch parallel zueinander geschaltete Kondensatoren 10a, 10b umfassen, die Keramikchipkondensatoren (MLCCs) sein können.

Im aktiven Zustand des zweiten Bordnetzes 5 ist die zweite elektrische Energieversorgungseinheit 7 über das zweite Bordnetz 5 elektrisch mit den im zweiten Bordnetz 5 angeordneten elektrischen/elektronischen Bauteilen 6 verbunden; im Ruhezustand hingegen ist die zweite elektrische Energieversorgungseinheit 7 elektrisch von den elektrischen/elektronischen Bauteilen 6 getrennt. Hierzu kann im zweiten Bordnetz 5 ein Schaltelement 11 in der Art eines elektrischen oder elektronischen Schalters vorgesehen sein, welcher zwischen in einem geöffneten Zustand und einem geschlossenen Zustand umschaltbar ist. In dem geöffneten Zustand des Schaltelements ist die zweite elektrische Energieversorgungseinheit 7 vom zweiten Bordnetz 5 und somit von den elektrischen/elektronischen Bauteilen 6 getrennt. Der geöffnete Zustand des Schaltelements 11 entspricht also dem Ruhezustand des Bordnetzes. Im geschlossenen Zustand des Schaltelements 11 ist die elektrische Energieversorgungseinheit 7 hingegen zur Bereitstellung von elektrischer Energie an die elektrischen Verbraucher 6 mit dem elektrischen Bordnetz verbunden. Der geschlossene Zustand des Schaltelements 8 entspricht folglich dem aktiven Zustand des Bordnetzes.

Es ist klar, dass mit "geöffneter Zustand" des Schaltelements 11 und damit mit dem Ruhezustand des zweiten Bordnetzes 5 auch gemeint sein kann, dass keine vollständige elektrische Trennung der zweiten elektrischen Energieversorgungseinheit 7 vom Bordnetz 5 erfolgt, sondern dass die von der zweiten elektrischen Energieversorgungseinheit 7 gelieferte elektrische Energie auf einen maximalen Leistungswert bzw. einen maximalen elektrischen Stromwert beschränkt ist. Dieser vorbestimmte Maximalwert für den elektrischen Strom kann beispielsweise 100 µA betragen.

Das umschaltbare Schaltelement 11 kann dabei auch als integrierter Schaltkreis bzw. als elektrischer Spannungswandler ausgebildet sein, welcher zur elektrischen Strombegrenzung im geöffneten Zustand des Schaltelements 11 die von der zweiten elektrischen Energieversorgungseinheit 7 gelieferte nominelle elektrische Ausgangsspannung auf einen dem Ruhezustand zugeordneten, abgesenkten Spannungswert reduziert.

Für die Ansteuerung des umschaltbaren Schaltelements 11 zum Umschalten zwischen dem geöffneten und dem geschlossenen Zustand kann im zweiten Bordnetz eine Steuerungseinheit 12 in der Art eines Mikrokontroller oder eines Mikroprozessors vorgesehen sein. Mittels der Steuerungseinheit 12 ist das umschaltbare Schaltelement 11 in Abhängigkeit von dem durch das kapazitive Kopplungselement 9 im zweiten Bordnetz 5 bereitgestellte Wakeup-Signal vom geöffneten in den geschlossenen Zustand umschaltbar.

Zur Erzeugung eines Wakeup-Signals im ersten Bordnetz 2 ist in diesem eine mit dem Kopplungselement 9 zusammenwirkende Signalerzeugungseinheit 13 vorgesehen, mittels welcher am kapazitiven Kopplungselement 9 eingangsseitig ein Aktivierungssignal zur Aktivierung des zweiten Bordnetzes 5 aus dem Ruhezustand erzeugt werden kann. Die Signalerzeugungseinheit 12 kann beispielsweise in der Art eines Rechteckgenerators ausgebildet sein. Grundsätzlich kann das von der Signalerzeugungseinheit 13 erzeugte elektrische Signal ein beliebiges Wechselspannungssignal sein, welches mittels des kapazitiven Kopplungselements 9 vom Bordnetz 2 in das zweite Bordnetz 5 übertragen werden kann. Beim zweiten Bordnetz 5 ist eine ebenfalls mit dem kapazitiven Kopplungselement 9 ausgangsseitig zusammenwirkende Signalempfangseinheit 14 vorgesehen, mittels welcher die Bereitstellung des Aktivierungssignals am kapazitiven Kopplungselement 9 detektiert wird. Die Signalempfangseinheit 14 kann im einfachsten Fall in der Art eines elektrischen Gleichrichters aufgebaut sein, welcher das von der Signalerzeugungseinheit 13 erzeugte Wechselspannungssignal, beispielsweise ein Rechtecksignal, in der Art eines Tiefpasses glättet. Die Signalempfangseinheit 14 wirkt mit der Steuerungseinheit 12 derart zusammen, dass die Signalempfangseinheit 14 den Empfang des Aktivierungssignals der Steuerungseinheit 12 übermittelt. Dies kann beispielsweise über eine geeignete Signal- oder Datenleitung geschehen, welche in der Fig. 1 grobschematisch durch einen Pfeil mit dem Bezugszeichen 15 wiedergegeben wird.

In einer technisch besonders einfach zu realisierenden Variante kann auf die Steuerungseinheit 12 auch verzichtet sein. Für den Fall, dass die Signalempfangseinheit 14 den vorangehend erläuterten elektrischen Tiefpass aufweist, kann dieser beispielsweise direkt mit dem umschaltbaren Schaltelement 11 verbunden sein, wenn er als Halbleiterschalter in der Art eines Transistors ausgebildet ist, und auf diese Weise das Schaltelement ansteuern. Beispielsweise kann der elektronische Tiefpass elektrisch mit einem Gate-Anschluss eines FET-Transistors verbunden werden, um auf diese Weise den Source-Drain-Kanal des Transistors zu steuern. In diesem Fall ist die zweite elektronische Energieversorgungseinheit 7 am Source-Anschluss eines solchen Transistors angeschlossen, und das zweite Bordnetz 5 ist am Drain-Anschluss des FET-Transistors angeschlossen. Selbstverständlich kann anstelle eines FETs auch ein anderer Transistortyp, beispielsweise ein bipolarer Transistor, verwendet werden.

Selbstverständlich sind hinsichtlich des konkreten technischen elektronischen Aufbaus der Signalempfangseinheit 14, der Steuerungseinheit 12 und des umschaltbaren Schaltelements 11 vielfältige technische Realisierungsmöglichkeiten vorstellbar. Beispielsweise kann in einer Variante daran gedacht sein, das umschaltbare Schaltelement 11 in der Art eines Halbleitertransistors derart in eine elektronische Schaltungsanordnung 1 zu integrieren, dass diese unter Verwendung des umschaltbaren Schaltelements 11 als Spannungsteiler wirkt, so dass die von der zweiten elektrischen Energieversorgungseinheit 7 bereitgestellte nominelle elektrische Ausgangsspannung im Ruhezustand des zweiten Bordnetzes 5 gegenüber dem aktiven Zustand reduziert wird. Hierzu kann das umschaltbare Schaltelement 11 in der Art eines Halbleiterschalters bzw. Transistors in einen Spannungsteiler integriert sein.

In die Signalerzeugungseinheit 13 kann des Weiteren eine Ladungspumpe 16 integriert sein, mittels welcher die Amplitude des von der Signalerzeugungseinheit 13 erzeugten Wechselspannungssignals eingestellt und auf einen gewünschten Ausgangswert erhöht bzw. eingestellt werden kann.

Die Erzeugung des Wakeup-Signals bzw. Aktivierungssignals durch die Signalerzeugungseinheit 13 im ersten Bordnetz 2 kann in Abhängigkeit von verschiedenen Ereignissen bzw. Parametern erfolgen. In diesem Zusammenhang kann das erste elektrische Bordnetz 2 in analoger Weise zum zweiten elektrischen Bordnetz 5 ebenfalls zwischen einem aktiven Zustand und einem Ruhezustand umschaltbar sein. Dabei kann die Bordnetz-Anordnung 1 beispielsweise derart ausgebildet sein, dass ein Umschalten des ersten Bordnetzes 2 vom Ruhezustand in den aktiven Zustand die Erzeugung des Aktivierungssignals durch die Signalerzeugungseinheit 13 bewirkt, so dass in der Folge automatisch auch das zweite Bordnetz 5 vom Ruhezustand in den aktiven Zustand umgeschaltet wird.

In weiterbildenden Ausführungsvarianten kann daran gedacht sein, dass das ersten elektrische Bordnetzes 2 nicht nur mit einem einzigen zweiten elektrischen Bordnetz 5 gekoppelt wird, sondern mit einer beliebigen Anzahl an weiteren Bordnetzen. Erfindungsgemäß kann mittels geeigneter kapazitiver Kopplungselemente 9 jeweils eine Kopplung des ersten elektrischen Bordnetzes 2 mit diesen Bordnetzen erfolgen, welche dann alle vom Ruhezustand in den aktiven Zustand umgeschaltet werden, wenn im ersten Bordnetz 2 ein entsprechendes Aktivierungssignal vorliegt.

Auch kann daran gedacht sein, dass die Signalerzeugungseinheit 13 mit einem Bussystem 17 des Kraftfahrzeugs, beispielsweise einem CAN-Bus oder LIN-Bus, direkt gekoppelt ist, so dass der Signalerzeugungseinheit 13 ein entsprechendes Aktivierungssignal vom Bussystem 17 bereitgestellt wird. Alternativ zu einer Erzeugung des Aktivierungssignals in Zusammenhang mit einem durch ein Bussystem erzeugten Wakeup-Signal kann in einer Variante vorgesehen sein, im ersten Bordnetz 2 durch die Signalerzeugungseinheit 13 ein Aktivierungssignal zu erzeugen, sobald die Startereinrichtung der Brennkraftmaschine des Kraftfahrzeug aktiviert wird.

In der Figur 2 ist eine spezielle Anwendungsform der erfindungsgemäßen Bornetz-Anordnung 1 in Verbindung mit einem elektrischen System 19 gezeigt. Gemäß dem Beispiel der Figur 2 ist die Bordnetz-Anordnung 1 jeweils Teil eines elektrischen Verbrauchers 20. In dem Beispiel der Figur 2 sind exemplarische drei solche elektrischen Verbraucher 20 mit jeweils einer Bordnetzanordnung 1 gezeigt. Die elektrischen Verbraucher sind also Teil des elektrischen Systems 19. Es ist dabei klar, dass in Varianten auch eine andere Anzahl an elektrischen Verbrauchern 20 vorgesehen sein kann. Ein solcher elektrischer Verbraucher 20 kann beispielsweise eine elektrische Ölpumpe, eine elektrische Kühlmittelpumpe, ein elektrischer Turbolader, ein elektrischer Kompressor oder ein elektrischer Lüfter sein. Das erste Bordnetz 2, welches ebenfalls Teil des elektrischen Systems 19 ist, erstreckt sich dabei über die drei Fahrzeugkomponenten 20 hinweg, d.h. die elektrischen/elektronischen Bauteile 3 (vgl. Fig.1) der Bordnetz-Anordnungen 1 der elektrischen Verbraucher 20 sind über das erste Bordnetz 2 elektrisch miteinander verbunden. Gleiches gilt mutatis mutandis für das zweite Bordnetz 5 und die elektrischen/elektronischen Bauteile 6.

Es ist klar, dass im elektrischen System 19 auch weitere elektrische Verbraucher ohne erfindungsgemäße-Bordnetz-Anordnung 1 an das erste und/oder zweite Bordnetz 2, 5 angeschlossen sein können; im Beispiel der Figur 2 ist exemplarisch eine weiterer elektrischer Verbraucher 21 a sowohl an das erste als auch zweite Bordnetz 2,5 angeschlossen. Ein weiterer elektrischer Verbraucher 21b ist nur an das erste Bordnetz 2 angeschlossen, und eine weiterer elektrischer Verbraucher 21 c ist ausschließlich an das zweite Bordnetz 5 angeschlossen. Es ist klar, dass in Varianten des Beispiels der Figur 2 eine andere Anzahl an weiteren elektrischen Verbraucher 21 a, 21 b, 21 c vorgesehen sein kann.

Die zweiten elektrischen/elektronischen Bauteile 6 im zweiten Bordnetz 5 der Bordnetz-Anordnungen 1 können wie im Zusammenhang mit der Figur 1 erläutert beim Umschalten des zweiten Bordnetzes 5 vom Ruhezustand in den aktiven Zustand elektrisch mit der im zweiten Bordnetz 5 vorgesehenen zweiten Energieversorgungseinheit 7 verbunden werden. In diesem Zusammenhang gelten alle Erläuterungen zur Bordnetz-Anordnung der Figur 1 gelten mutatis mutandis für die in Zusammenhang mit dem elektrischen System 19 in der Figur 2 dargestellten Bordnetz-Anordnungen 1.

## Patentansprüche

1. Bordnetz-Anordnung (1) für ein Kraftfahrzeug,
- mit einem ersten Bordnetz (2),
- mit einem galvanisch vom ersten Bordnetz (2) getrennten zweiten Bordnetz (5), welches zwischen einem Ruhezustand und einem aktiven Zustand umschaltbar ist,
- mit einem kapazitiven Kopplungselement (9), mittels welchem das erste Bordnetz (2) zur Signalübertragung kapazitiv mit dem zweiten Bordnetz (5) gekoppelt ist,
- mit einer im ersten Bordnetz (2) vorgesehenen und mit dem Kopplungselement (9) zusammenwirkenden Signalerzeugungseinheit (13), mittels welcher am Kopplungselement (9) eingangsseitig ein Aktivierungssignal zur Aktivierung des zweiten Bordnetzes (5) aus dem Ruhezustand bereitstellbar ist,
- mit einer im zweiten Bordnetz (5) vorgesehenen Signalempfangseinheit (14), welche mit dem Kopplungselement (9) derart zusammenwirkt, dass sie bei Bereitstellung des Aktivierungssignal ausgangsseitig am Kopplungselement (9) das zweite Bordnetz (5) vom Ruhezustand in den aktiven Zustand umschaltet.

2. Bordnetz-Anordnung nach Anspruch 1,
**dadurch gekennzeichnet, dass**
das kapazitive Kopplungselement (9) zwei elektrisch parallel zueinander geschaltete Kondensatoren (10a, 10b), insbesondere Keramikchipkondensatoren (MLCCs), umfasst.

3. Bordnetz-Anordnung nach Anspruch 1 oder 2,
**dadurch gekennzeichnet, dass**
die Bordnetz-Anordnung (1) derart ausgebildet ist, dass ein im Ruhezustand im zweiten Bordnetz (5) von einer (zweiten) Energieversorgungseinheit (7) bereitgestellter elektrischer Strom einen vorbestimmten Maximalwert nicht überschreitet.

4. Bordnetz-Anordnung nach Anspruch 3,
**dadurch gekennzeichnet, dass**
der vorbestimmte Maximalwert 100µA beträgt.

5. Bordnetz-Anordnung nach einem der vorhergehenden Ansprüche,
**dadurch gekennzeichnet, dass**
- im zweiten Bordnetz (5) ein umschaltbares Schaltelement (11) vorgesehen ist, welches zwischen einem geöffneten Zustand, der dem Ruhezustand des zweiten Bordnetzes (5) zugeordnet ist, und einem geschlossenen Zustand, der dem aktiven Zustand des zweiten Bordnetzes (5) zugeordnet ist,
- die (zweite) Energieversorgungseinheit (7) im geschlossenen Zustand des Schaltelements (11) elektrisch mit dem zweiten Bordnetz (5) verbunden und im geöffneten Zustand elektrisch von diesem getrennt ist,
- im zweiten Bordnetz eine mit der Signalempfangseinheit (13) zusammenwirkende Steuerungseinheit (12) vorgesehen ist, welche das Schaltelement (11) bei Empfang des Aktivierungssignals durch die Signalempfangseinheit (14) in den geschlossenen Zustand umschaltet.

6. Bordnetz-Anordnung nach einem der vorhergehenden Ansprüche,
**dadurch gekennzeichnet, dass**
die Signalerzeugungseinheit (13) einen Signalgenerator umfasst, mittels welchem zum Erzeugen des Aktivierungssignals ein Wechselspannungssignal, insbesondere eine Rechteckspannung, erzeugbar ist.

7. Bordnetz-Anordnung nach Anspruch 6,
**dadurch gekennzeichnet, dass**
im ersten Bordnetz (2) zwischen der Signalerzeugungseinheit (13) und dem Kopplungselement (11) eine Ladungspumpe (16) vorgesehen ist, mittels welcher eine Amplitude des von der Signalerzeugungseinheit (13) erzeugten Wechselspannungssignals einstellbar ist.

8. Bordnetz-Anordnung nach einem der vorhergehenden Ansprüche,
**dadurch gekennzeichnet, dass**
die Signalempfangseinheit (14) eine Gleichrichtereinrichtung zum Gleichrichten des vom Signalgenerator erzeugten Wechselspannungssignals umfasst.

9. Elektrischer Verbraucher (20), insbesondere Ölpumpe oder elektrische Kühlmittelpumpe oder elektrischer Abgasturbolader oder elektrischer Kompressor oder elektrischer Lüfter, mit einer Bordnetz-Anordnung (1) nach einem der vorhergehenden Ansprüche.

10. Elektrisches System (19), insbesondere für ein Kraftfahrzeug,
- mit wenigstens zwei elektrischen Verbrauchern (20) nach Anspruch 9, welche mittels des ersten und zweiten Bordnetzes (2, 5) elektrisch miteinander verbunden sind,
- mit einer gemeinsamen, im zweiten elektrischen Bordnetz (5) angeordneten zweiten elektrischen Energieversorgungseinheit (7), welche im Ruhezustand des zweiten Bordnetzes (5) elektrisch von diesem getrennt ist und im aktiven Zustand elektrisch mit diesem verbunden ist.

11. Kraftfahrzeug,
- mit wenigstens einer Bordnetz-Anordnung (1) nach einem der Ansprüche 1 bis 8 und/oder mit wenigstens einem elektrischen System (19) nach Anspruch 10.

12. Verfahren zum Aktivieren eines (zweiten) Bordnetzes (5) aus einem Ruhezustand,
- gemäß welchem ein mit einem galvanisch von einem ersten Bordnetz (2) getrenntes zweites Bordnetz (5) vorgesehen ist, welches zwischen einem Ruhezustand und einem aktiven Zustand umschaltbar ist, wobei das erste Bordnetz (2) mittels eines kapazitiven Kopplungselements (9) kapazitiv mit dem zweiten Bordnetz (5) verbunden ist,
- gemäß welchem ein von einer im ersten Bordnetz (2) vorgesehenen Signalerzeugungseinheit (13) erzeugtes Aktivierungssignal mittels des Kopplungselements (9) an das eine im zweiten Bordnetz (5) vorgesehene Signalempfangseinheit (14) übertragen wird,
- gemäß welchem das zweite Bordnetz (5) bei Empfang des Aktivierungssignals durch die Signalempfangseinheit (14) vom Ruhezustand in den aktiven Zustand umgeschaltet wird.

## Claims

1. On-board network arrangement (1) for a motor vehicle,
- having a first on-board network (2),
- having a second on-board network (5) which is galvanically separated from the first on-board network (2) and which can be switched between a rest state and an active state,
- having a capacitive coupling element (9) by means of which the first on-board network (2) is coupled in a capacitive manner to the second on-board network (5) for signal transmission,
- having a signal production unit (13) which is provided in the first on-board network (2) and which cooperates with the coupling element (9) and by means of which on the coupling element (9) at the input side an activation signal can be provided to activate the second on-board network (5) from the rest state,
- having a signal receiving unit (14) which is provided in the second on-board network (5) and which cooperates with the coupling element (9) in such a manner that, when the activation signal is provided at the output side on the coupling element (9), the second on-board network (5) switches from the rest state into the active state.

2. On-board network arrangement according to claim 1,
**characterised in that**
the capacitive coupling element (9) comprises two capacitors (10a, 10b) which are electrically connected to each other in parallel, in particular ceramic chip capacitors (MLCCs).

3. On-board network arrangement according to claim 1 or 2,
**characterised in that**
the on-board network arrangement (1) is constructed in such a manner that an electrical current which is provided in the rest state in the second on-board network (5) by a (second) energy supply unit (7) does not exceed a predetermined maximum value.

4. On-board network arrangement according to claim 3,
**characterised in that**
the predetermined maximum value is 100 µA.

5. On-board network arrangement according to any one of the preceding claims,
**characterised in that**
- there is provided in the second on-board network (5) a switchable switching element (11) which is switchable between an open state which is associated with the rest state of the second on-board network (5) and a closed state which is associated with the active state of the second on-board network (5),
- the (second) energy supply unit (7) in the closed state of the switching element (11) is electrically connected to the second on-board network (5) and in the open state is electrically separated therefrom,
- in the second on-board network, there is provided a control unit (12) which cooperates with the signal receiving unit (14) and which switches the switching element (11) into the closed state when the activation signal is received by the signal receiving unit (14).

6. On-board network arrangement according to any one of the preceding claims,
**characterised in that**
the signal production unit (13) comprises a signal generator by means of which an AC voltage signal, in particular a squarewave voltage, can be produced in order to produce the activation signal.

7. On-board network arrangement according to claim 6,
**characterised in that**
in the first on-board network (2) between the signal production unit (13) and the coupling element (11) there is provided a charging pump (16) by means of which an amplitude of the AC voltage signal produced by the signal production unit (13) can be adjusted.

8. On-board network arrangement according to any one of the preceding claims,
**characterised in that**
the signal receiving unit (14) comprises a rectifier device for rectifying the AC voltage signal produced by the signal generator.

9. Electrical consumer (20), in particular oil pump or electrical coolant pump or electrical exhaust gas turbocharger or electrical compressor or electrical ventilator, having an on-board network arrangement (1) according to any one of the preceding claims.

10. Electrical system (19) in particular for a motor vehicle,
- having at least two electrical consumers (20) according to claim 9, which are electrically connected to each other by means of the first and second on-board network (2,5),
- having a common second electrical energy supply unit (7) which is arranged in the second on-board electrical network (5) and which in the rest state of the second on-board network (5) is electrically separated therefrom and in the active state is electrically connected thereto.

11. Motor vehicle,
- having at least one on-board network arrangement (1) according to any one of claims 1 to 8 and/or having at least one electrical system (19) according to claim 10.

12. Method for activating a (second) on-board network (5) from a rest state,
- according to which there is provided a second on-board network (5) which is galvanically separated from a first on-board network (2) and which can be switched between a rest state and an active state, wherein the first on-board network (2) is connected to the second on-board network (5) in a capacitive manner by means of a capacitive coupling element (9),
- according to which an activation signal produced by means of a signal production unit (13) which is provided in the first on-board network (2) is transmitted by means of the coupling element (9) to the signal receiving unit (14) which is provided in the second on-board network (5),
- according to which the second on-board network (5) when the activation signal is received by the signal receiving unit (14) is switched from the rest state into the active state.

## Revendications

1. Ensemble tableau de bord (1) pour un véhicule à moteur,
- avec un premier tableau de bord (2),
- avec un deuxième tableau de bord (5) séparé galvaniquement du premier tableau de bord (2), lequel est commutable entre un état de repos et un état actif,
- avec un élément de couplage (9) capacitif, au moyen duquel le premier tableau de bord (2) est couplé au deuxième tableau de bord (5) de manière capacitive pour la transmission de signal,
- avec une unité de génération de signal (13) coopérant avec l'élément de couplage (9) et prévue dans le premier tableau de bord (2), au moyen de laquelle un signal d'activation peut être mis à disposition côté entrée au niveau de l'élément de couplage (9) pour l'activation du deuxième tableau de bord (5) à partir de l'état de repos,
- avec une unité de réception de signal (14) prévue dans le deuxième tableau de bord (5), laquelle coopère avec l'élément de couplage (9) de telle manière qu'elle commute le deuxième tableau de bord (5) de l'état de repos à l'état actif lors de la mise à disposition du signal d'activation côté sortie au niveau de l'élément de couplage (9).

2. Ensemble tableau de bord selon la revendication 1,
**caractérisé en ce que**
l'élément de couplage (9) capacitif comprend deux condensateurs (10a, 10b) connectés électriquement en parallèle l'un par rapport à l'autre, en particulier des condensateurs puce céramiques (MLCCs).

3. Ensemble tableau de bord selon la revendication 1 ou 2,
**caractérisé en ce que**
l'ensemble tableau de bord (1) est réalisé de telle manière que
un courant électrique mis à disposition à l'état de repos dans le deuxième tableau de bord (5) par une (deuxième) unité d'alimentation en énergie (7) ne dépasse pas une valeur maximum prédéfinie.

4. Ensemble tableau de bord selon la revendication 3,
**caractérisé en ce que**
la valeur maximum prédéfinie est de 100 µA.

5. Ensemble tableau de bord selon l'une quelconque des revendications précédentes,
**caractérisé en ce que**
- dans le deuxième tableau de bord (5), un élément de commutation commutable (11) est prévu qui est commutable entre un état ouvert, qui est affecté à l'état de repos du deuxième tableau de bord (5), et un état fermé, qui est affecté à l'état actif du deuxième tableau de bord (5),
- la (deuxième) unité d'alimentation en énergie (7) est reliée électriquement au deuxième tableau de bord (5) à l'état fermé de l'élément de commutation (11) et est séparé électriquement de celui-ci à l'état ouvert,
- une unité de commande (12) coopérant avec l'unité de réception de signal (14) est prévue dans le deuxième tableau de bord, laquelle commute l'élément de commutation (11) lors de la réception du signal d'activation par l'unité de réception de signal (14) à l'état fermé.

6. Ensemble tableau de bord selon l'une quelconque des revendications précédentes,
**caractérisé en ce que**
l'unité de génération de signal (13) comprend un générateur de signal, au moyen duquel un signal de tension alternative, en particulier une tension rectangulaire, peut être généré pour générer le signal d'activation.

7. Ensemble tableau de bord selon la revendication 6,
**caractérisé en ce que**
une pompe de charge (16), au moyen de laquelle une amplitude du signal de tension alternative généré par l'unité de génération de signal (13) est réglable, est prévue dans le premier tableau de bord (2) entre l'unité de génération de signal (13) et l'élément de couplage (11).

8. Ensemble tableau de bord selon l'une quelconque des revendications précédentes,
**caractérisé en ce que**
l'unité de réception de signal (14) comprend un dispositif redresseur pour le redressement du signal de tension alternative généré par le générateur de signal.

9. Consommateur électrique (20), en particulier pompe à huile ou pompe d'agent de refroidissement électrique ou turbocompresseur à gaz d'échappement électrique ou compresseur électrique ou ventilateur électrique, avec un ensemble tableau de bord (1) selon l'une quelconque des revendications précédentes,

10. Système électrique (19), en particulier pour un véhicule à moteur,
- avec au moins deux consommateurs électriques (20) selon la revendication 9, lesquels sont reliés électriquement l'un à l'autre au moyen du premier et deuxième tableau de bord (2, 5),
- avec une deuxième unité d'alimentation en énergie (7) électrique commune agencée dans le deuxième tableau de bord (5) électrique, laquelle est séparée électriquement de celui-ci à l'état de repos du deuxième tableau de bord (5) et est reliée électriquement à celui-ci à l'état actif.

11. Véhicule à moteur,
- avec au moins un ensemble tableau de bord (1) selon l'une quelconque des revendications 1 à 8 et/ou avec au moins un système électrique (19) selon la revendication 10.

12. Procédé d'activation d'un (deuxième) tableau de bord (5) à partir d'un état de repos,
- selon lequel un deuxième tableau de bord (5) séparé galvaniquement d'un premier tableau de bord (2) est prévu, lequel est commutable entre un état de repos et un état actif, dans lequel le premier tableau de bord (2) est relié de manière capacitive au deuxième tableau de bord (5) au moyen d'un élément de couplage (9) capacitif,
- selon lequel un signal d'activation généré par une unité de génération de signal (13) prévue dans le premier tableau de bord (2) est transmis à l'unité de réception de signal (14) prévue dans le deuxième tableau de bord (5) au moyen de l'élément de couplage (9),
- selon lequel le deuxième tableau de bord (5) est commuté de l'état de repos à l'état actif lors de la réception du signal d'activation par l'unité de réception de signal (14).
